# EUROPÄISCHE PATENTSCHRIFT

(11) **EP 2 058 149 B1**
(45) Veröffentlichungstag und Bekanntmachung des Hinweises auf die Patenterteilung: **12.05.2010**
(21) Anmeldenummer: 08015018.8
(22) Anmeldetag: 26.08.2008
(51) Int. Cl.: B60C 27/06

(54) **Gleitschutzkette für grobstollige Reifen**
Anti-skid chain for deep-tread tyres
Chaîne antidérapante pour pneus à grosses barrettes

(30) Priorität: 08.11.2007 DE 102007054274
(43) Veröffentlichungstag der Anmeldung: 13.05.2009
(73) Patentinhaber: RUD Ketten Rieger & Dietz GmbH u. Co. KG, 73432 Aalen-Unterkochen (DE)
(72) Erfinder: Rieger, Hansjörg, 73431 Aalen (DE); Schmidle, Reinhold, 73434 Aalen (DE); Kaiser, Helmut, 73457 Esslingen (DE)
(74) Vertreter: Grünecker, Kinkeldey, Stockmair & Schwanhäusser Anwaltssozietät

(56) Entgegenhaltungen:
- CH-A- 508 495
- DE-A1- 1 480 999
- DE-A1- 2 311 291
- DE-B- 1 012 839
- DE-B- 1 282 502
- DE-B- 1 288 934
- US-A- 1 502 792
- US-A- 2 215 840
- US-A- 2 830 639

## Beschreibung

Die Erfindung betrifft eine Gleitschutzkette für grobstollige Reifen, mit wenigstens einem sich im montierten Zustand in Umfangsrichtung entlang jeweils einer Reifenwange erstreckenden Seitenspannstrang und mit einem im montierten Zustand auf der Reifenlauffläche aufliegenden Laufnetz, das mit den beiden Seitenspannstängen über im montierten Zustand an der Reifenschulter angeordnete Halteknotenstellen verbunden ist.

Gleitschutzketten sind aus dem Stand der Technik bekannt und werden dazu eingesetzt, die Gefahr des Durchrutschens der angetriebenen Räder eines Kraftfahrzeugs auf rutschigem Terrain, wie beispielsweise Schnee, Schlamm, Stein und Eis, zu vermeiden. Gleitschutzketten sind beispielsweise aus den Patentveröffentlichungen und Produkten der Anmelderin sowie den Patentveröffentlichungen und Produkten der Firmen Erlau und Weissenfels bekannt.

Bei einer Reihe von Gleitschutzketten befindet sich auf der Reifenlauffläche, mit der der Reifen auf den Hintergrund abrollt, ein Laufnetz aus Kettenelementen, so dass das Laufnetz beim Abrollen des Reifens zwischen Reifenlauffläche und Untergrund zu liegen kommt. Die Kettenelemente können aus den unterschiedlichsten Arten von Kettengliedern, Laschen und/oder Stegen aufgebaut sein. Sie können zusätzlich mit Greifelementen, wie Stege, Klauen, Stollen, Spikes oder Krallen versehen sein. Das Laufnetz entsteht dadurch, dass Einzelstränge aus den Kettenelementen zu einer netzartigen Struktur verbunden sind. Mehrere Einzelstränge sind dabei zu Knotenstehen des Laufnetzes miteinander verbinden.

Als wichtig für eine gute Funktion der Gleitschutzkette hat sich herausgestellt, dass die Anteile des Laufnetzes und der Lauffläche des Reifens gleichmäßig so verteilt sind, dass stets auch der Reifen auf dem Untergrund aufliegt.

Die Seitenspannstränge erstrecken sich entlang der in axialer Richtung des Reifens weisenden Reifenwangen und sichern das Laufnetz gegen seitliches Abrutschen. Außerdem spannen sie durch festes Anziehen in Umfangsrichtung das Laufnetz fest über die Lauffläche des Reifens. Die Spannenkräfte werden dabei über die Halteknotenstellen in das Laufnetz eingeleitet.

Eine Gleitschutzkette für grobstollige Reifen gemäß dem Oberbegriff des Anspruches 1 ist aus der Druckschrift DE 1480999 A1 bekannt.

Problematisch bei den bekannten Gleitschutzketten ist die Verwendung bei grobstolligen Reifen, wie sie insbesondere im Bereich schwerer, geländegängiger Fahrzeuge, insbesondere bei geländegängigen Nutz- und Militärfahrzeugen, verwendet werden. Die herkömmlichen Gleitschutzketten sind hier insofern nachteilig, als sie im Betrieb in die Rillen zwischen den Reifenstollen eintauchen und dort entweder festklemmen oder durch Verschmutzung festgebacken werden. Dies führt dazu, dass die Gleitschutzkette beim Abrollen des Reifens nicht mehr über den Reifen wandern kann. Daraus ergibt sich eine starke Belastung der Reifenstollen bis hin zu deren Ausbrechen. Außerdem ist die Selbstreinigung der Gleitschutzkette stark beeinträchtigt und die Traktion ist verringert.

In Anbetracht dieser Nachteile der bekannten Gleitschutzketten liegt der Erfindung die Aufgabe zugrunde, eine Gleitschutzkette speziell für grobstollige Reifen zu schaffen, die sich im Betrieb nicht zwischen den Stollen festsetzt.

Diese Aufgabe wird für eine Gleitschutzkette der eingangs genannten Art erfindungsgemäß dadurch gelöst, dass das Laufnetz aus Einzelsträngen aufgebaut ist, die unter Bildung von geschlossenen Fünfecken miteinander verbunden sind, wobei sich die Fünfecke über die Reifenmitte erstrecken.

Die Reifenschulter, also der Übergang zwischen der Lauffläche und den beiden Reifenwangen, ist bei grobstolligen Reifen sehr steil, weil sich das Stollenprofil über die gesamte axiale Breite des Reifens erstreckt. Ein Festsetzen der Gleitschutzkette zwischen den Stollen lässt sich überraschenderweise vermieden, wenn die Halteknotenstellen, die sich bei den bekannten Gleitschutzketten an der Reifenwange befinden, an die Reifenschulter verlegt werden. Vermutlich werden durch diese Maßnahme die Spannkräfte von den Seitenspannsträngen über die Halteknotenstellen direkt in die Mantelfläche der Lauffläche in das Laufnetz eingeleitet, so dass durch die Spannkräfte das Laufnetz stets aus den Rillen zwischen den Stollen gezogen werden kann.

Die erfindungsgemäße Lösung kann durch die folgenden weiteren Maßnahmen, die jeweils unabhängig für sich betrachtet von Vorteil sind und unabhängig miteinander kombiniert werden können, weiter entwickelt werden.

So können gemäß einer vorteilhaften Ausgestaltung die Halteknotenstellen jeweils über einen Leiterstrang mit dem zugehörigen Seitenspannstrang verbunden sein. Dies führt zu einer verbesserten Beweglichkeit der Gleitschutzkette gegenüber den Reifen. Der Leiterstrang stellt dabei einen einzelnen, einstrangigen, Ketten- oder Seilstrang dar, der den Seitenspannstrang mit dem Laufnetz verbindet. Der Leiterstrang kann sich im montierten Zustand insbesondere in radialer und/oder radiusparalleler Richtung entlang der Reifenwange erstrecken. Dies hat den Vorteil, dass die Radiusverkürzung im Bereich der Auflagefläche des Reifens auf dem Untergrund direkt an den Seitenspannstrang übertragen und so die Gleitschutzkette der Walkbewegung des Reifens optimal an die Gleitschutzkette weitergeleitet werden kann.

Das Laufnetz kann ferner aus Einzelsträngen aufgebaut sein, die unter Bildung von geschlossenen Fünfecken miteinander verbunden sind. Die Einzelstränge können dabei im Bereich der Lauffläche an Laufknotenstellen zusammentreffen und femer aus unterschiedlichen oder gleichartigen Kettenelementen oder kettenförmig miteinander verbundenen Elementen, teilweise auch aus seilähnlichen Elementen, aufgebaut sein. Durch die Bildung von geschlossenen Fünfecken wird eine möglichst geradlinige Übertragung der Krafte im Laufnetz mit nur wenigen Laufknotenstellen und einer Aufspaltung in nur wenige Einzelstränge erreicht, so dass die Einzelstränge des Laufnetzes stärker gespannt sind und sich weniger leicht in die Rillen zwischen den Reifenstollen einpressen lassen. Gegenüber Laufnetzen mit einer Grundstruktur aus Vierecken mit sechs oder mehr Ecken ist die Gefahr des Eintauchens in die Rillen des grobstolligen Reifens überraschend deutlich verringert.

Ein besonders störungsfreier Betrieb mit grobstolligen Reifen scheint sich zu ergeben, wenn die den Reifenschultern zugewandten Einzelstränge eines Fünfeckes jeweils länger sind, als die der Reifenmitte zugewandten Einzelstränge. Insbesondere können die Fünfecke bezüglich eine axial verlaufenden Achse symmetrisch aufgebaut sein, um eine symmetrische Spanntreffverteilung innerhalb des Laufnetzes zu erreichen.

In einer weiteren vorteilhaften Ausgestaltung können die Seitenverhältnisse des Fünfeckes 5:7:9 und/oder ein ganzzahliges Vielfaches davon betragen. Derartige Seitenverhältnisse ermöglichten offenbar einen besonders zuverlässigen Betrieb.

Der Geradeauslauf kann bei der erfindungsgemäßen Gleitschutzkette gemäß einer vorteilhaften Ausgestaltung dadurch verbessert werden, dass das Laufnetz in Umfangsrichtung verlaufende Spurstränge aufweisen, die insbesondere jeweils einen Teil bzw. eine Seite der Fünfecke bilden. Die Spurstränge führen bei weichem Untergrund dazu, dass der Reifen seine Laufrichtung leichter und stabiler beibehält.

Um die Antriebskraft leichter auf den Untergrund zu übertragen und die Traktion zu erhöhen, können in einer weiteren Ausgestaltung Traktionsstränge vorgesehen sein, die schräg bis quer zu einer durch die Reifenmitte gelegte Ebene verlaufen. Insbesondere können die Spurstränge durch die Traktionsstränge jeweils miteinander verbunden sein und mit diesen eine vorzugsweise in Umfangsrichtung durchgängige Spurfinie bilden, die zu einer größeren Laufruhe führt. Die Traktionsstränge können jeweils einen Teil bzw. zwei Seiten der fünfeckigen Grundstruktur des Laufnetzes bilden.

Um die Antriebskraft der Reifen möglichst effizient zu übertragen, können die Spurstränge kürzer sein als die Traktionsstränge.

Die Spurtreue eines mit der erfindungsgemäßen Gleitschutzkette ausgestatteten Stollenreifens kann gemäß einer weiteren Ausgestaltung dadurch weiter verbessert werden, dass das Laufnetz Spurstränge aufweist, die im montierten Zustand In Umfangsrichtung abwechselnd zu jeweils einer Seite versetzt gegenüber der Reifenmitte in Umfangsrichtung verlaufen.

Das Laufnetz kann femer Diagonalstränge aufweisen, die mit den Halteknotenstellen verbunden sind und jeweils einen Teil bzw. eine Seite eines Fünfeckes bilden können. Die Diagonalstränge können, wie die Traktionsstränge, schräg zur Umfangsrichtung entlang der Lauffläche verlaufen. Sie dienen dazu, die von den Seitenspannsträngen erzeugten Spannkräfte zu den Laufknoten zu leiten. Bei den grobstolligen Reifen ist es von Vorteil, wenn diese Krafteinleitung mit einer in Umfangsrichtung weisenden Komponente erfolgt, so dass sich das Laufnetz im Zuge des Abrollvorganges, bei dem es zwischen dem Reifen und dem Untergrund zu liegen kommt, der Walkbewegung folgend zusammenziehen und ausdehnen kann. Die Diagonalstränge können in montierten Zustand vorzugsweise vollständig in der die Lauffläche des grobstolligen Reifens umhüllenden Mantelfläche liegen

Die Neigung des Laufnetzes, in die Rillen zwischen den Stollen einzutauchen, kann gemäß einer weiteren vorteilhaften Ausgestaltung dadurch verringert werden, dass die Diagonalstränge länger als die Traktionsstränge sind. Dies gewährleistet eine gute Spannung des Laufnetzes über die Stollen.

Gemäß einer weiteren Ausgestaltung kann jedes Fünfeck des Laufnetzes einen Spurstrang, zwei Diagonalstränge und zwei Traktionsstränge aufweisen und/oder aus diesen bestehen.

Es können auch in Richtung der Diagonalstränge jeweils vier Fünfecke zwischen zwei Halteknotenstellen angeordnet sein. Diese Maßnahme führt ebenfalls zu einer effizienten Spannung des Laufnetzes über die Stollen, die ein Eintauchen in die Rillen verhindert. Die Spannkraft von den Seitenspannsträngen wird so mit nur geringen Abweichungen zwischen den von beiden Seiten diagonal aufeinander zulaufenden Diagonalsträngen übertragen.

Zur Verbesserung der Spurtreue und der Laufruhe eines mit der erfindungsgemäßen Gleitschutzkette ausgestatteten Stollenreifens ist es von Vorteil, wenn das Laufnetz beim Abrollen eine durchgängige Spur erzeugt, also in Umfangsrichtung eine im Wesentlichen durchgängige Spurlinie aufweist. Eine solche Spurlinie kann beispielsweise dadurch erreicht werden, dass das Laufnetz aus zwei ineinander verschränkten, sich in Umfangsrichtung erstreckenden und in Umtangsrichtung, sowie in axialer Richtung gegeneinander versetzten Reihen von Fünfecken aufgebaut ist.

Gemäß einer weiteren Ausführungsform können sich zwei in Umfangsrichtung benachbarte Fünfecke jeweils einen sich im montierten Zustand über die Reifenmitte erstreckenden, im Wesentlichen schräg und/oder quer zur Ebene durch die Reifenmitte verlaufenden Traktionsstrang teilen.

Die Länge eines Spurstranges In Umfangsrichtung ist kleiner als die Länge der Auflagefläche des Reifens auf dem Untergrund, so dass stets wenigstens ein Spurstrang, vorzugsweise zwei Spurstränge, sich beim Abrollen des Reifens zwischen der Auflagefläche und dem Hintergrund liegen.

Ferner können im montierten Zustand auf der Lauffläche liegende Laufknotenstellen, an denen die Einzelstränge des Laufnetzes miteinander verbunden sind, in zwei jeweils zu beiden Seiten der Reifenmitte parallel zu dieser sich erstreckenden Ebenen angeordnet sein. Der Abstand in Umfangsrichtung zweier benachbarter Laufknotenstellen kann in etwa der Länge der Auflagefläche des Reifens entsprechen.

Die Halteknotenstellen können jeweils in Umfangsrichtung versetzt zueinander an den beiden Reifenschultern angeordnet sein. Dadurch verlängem sich die dazwischen liegenden Einzelstränge, was die Elastizität des Laufnetzes erhöht.

Schließlich betrifft die Erfindung einen, beispielsweise an einem Geländelastkraftwagen befestigten, Stollenreifen mit einer Gleitschutzkette in einer der oben dargestellten Ausgestaltungen.

Im Folgenden ist die Erfindung beispielhaft anhand einer Ausführungsform mit Bezug auf die Zeichnungen näher erläutert. Die bei der Ausführungsform beispielhaft dargestellte Merkmalskombination kann nach Maßgabe der obigen Ausführungen entsprechend der für einen bestimmten Anwendungsfall notwendigen Eigenschaften der erfindungsgemäßen Gleitschutzkette durch weitere Merkmale ergänzt werden. Auch können, ebenfalls nach Maßgabe der obigen Ausführungen, einzelne Merkmale bei der beschriebenen Ausführungsform auch weggelassen werden, wenn es auf die Wirkung dieses Merkmals in einem konkreten Anwendungsfall nicht ankommt

In den Zeichnungen werden für Elemente gleicher Funktion und/oder gleichen Aufbaus stets dieselben Bezugszeichen verwendet.

Es zeigen:
- Fig. 1: den auf eine Zeichenebene projizierten Aufbau des erfindungsgemäßen Laufnetzes in einer schematischen Darstellung;
- Fig. 2: eine schematische Draufsicht auf die Lauffläche eines mit der erfindungsgemäßen Gleitschutzkette ausgestatten grobstolligen Reifens; und
- Fig. 3: eine Seitenansicht auf eine Reifenwange des Reifens der Fig. 2.

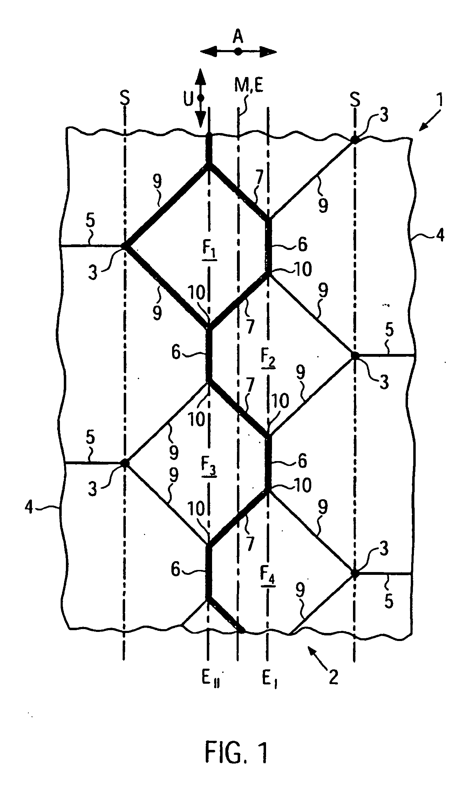

Zunächst wird anhand der schematischen Darstellung der Fig. 1 der Aufbau einer erfindungsgemäßen Gleitschutzkette erläutert.

In der schematischen Darstellung der Fig. 1 sind sämtliche Elemente der erfindungsgemäßen Gleitschutzkette 1 auf die Zeichenebene abgewickelt gezeigt. Die Fig. 1 ist nicht maßstabsgetreu.

Die Einzelstränge, aus denen die Gleitschutzkette aufgebaut ist, sind in Fig. 1 als durchgezogene Linien dargestellt, Zur Verdeutlichung einzelner Elemente der Gleitschutzkette 1 sind einige der durchgezogenen Linien verdickt dargestellt. Diese Verdickung entspricht nicht zwingend einer verstärkten mechanischen Ausgestaltung dieser Elemente, sondern dient lediglich der Erläuterung des Aufbaus.

Die Einzelstränge der Gleitschutzkette 1 können aus Kettenelementen wie Rundstahlgliedern, Profilstahlgliedem, Kettenlaschen, Stegen und, wenigstens zum Teil, auch Seilabschnitten aufgebaut sein.

Das sich im montierten Zustand zwischen den beiden Reifenschultern S erstreckende, auf die Lauffläche des Reifens aufgelegte Laufnetz 2 ist über Halteknotenstellen 3 mit Seitenspannsträngen 4 verbunden.

Die Halteknotenstellen 3 sind im montierten Zustand der Gleitschutzkette an den beiden Reifenschultern S angeordnet. Die Seitenspannstränge verlaufen in Umfangsrichtung U entlang der beiden in axialer Richtung weisenden Reifenwangen (in Fig. 1 nicht dargestellt) und weisen einen kleineren Radius auf als das Laufnetz.

Wie in Fig. 1 zu erkennen ist, kann das Laufnetz 2 mit den Seitenspannsträngen 4 leiterförmig durch jeweils einzelne Leiterkettenstränge 5 verbunden sein. Die Leiterkettenstränge verlaufen im montierten Zustand vorzugsweise in radialer Richtung und/oder radiusparallel von den Seitenspannsträngen 4 an den Reifenwangen zu den Halteknotenstellen 3 an den Reifenschultern S.

Das Laufnetz 2 kann Spurstränge 6 aufweisen, die im montierten Zustand in Umfangsrichtung U abwechselnd zu jeweils einer Seite versetzt gegenüber der Reifenmitte M in Umfangsrichtung U verlaufen. Die Spurstränge 6 können durch Traktionsstränge 7 miteinander verbunden sein. Die Traktionsstränge 7 erstrecken sich beispielsweise in einer Richtung schräg und/oder quer zur Umfangsrichtung U bzw. zur Ebene E durch die Reifenmitte über die Reifenmitte M hinweg von einem Spurstrang und in Umfangsrichtung U nächsten Spurstrang.

Insbesondere kann die Abfolge aus Spursträngen 6 und Traktionssträngen 7 in Umfangsrichtung U eine durchgängige Spurlinie bilden, wie sie in Fig. 1 mit einer leicht verdickten Linie dargestellt ist.

Die Spurstränge 6 bzw. die Spurlinie können über Diagonalstränge 9 jeweils mit den Halteknotenstellen 3 verbunden sein. Die Diagonalstränge verlaufen insbesondere schräg zur Umfangsrichtung U.

Die Einzelstränge des Laufnetzes 2, beispielsweise also die Spurstränge 6, die Traktionsstränge 7 sowie die Diagonalstränge 9 sind an Laufknotenstellen 10 miteinander verbunden. Wie Fig. 1 zeigt, treffen beim Ausführungsbeispiel der Fig. 1 an jeder Laufknotenstelle 10 drei Einzeistränge, nämlich ein Spurstrang 6, ein Diagonalstrang 9 und ein Traktionsstrang 7 zusammen. Die Laufknotenstellen 10 sind in Umfangsrichtung U in zwei parallel zur Reifenmitte M verlaufenden Ebenen E₁, E₁₁ angeordnet.

Jeweils ein Spurstrang 6, die zwei mit den Enden des Spurstranges 6 verbundenen Traktionsstränge 7 sowie die beiden mit diesen Traktionssträngen 7 verbundenen Diagonalstränge 9 bilden zusammen ein Fünfeck F, das die Grundstruktur des Laufnetzes 2 darstellt. In Fig. 1 sind drei Fünfecke F₁, F₂, F₃ und F₄ vollstandig dargestellt. Das Fünfeck F₁ ist zur leichteren Erkennbarkeit mit verdickten Linien dargestellt. Im Folgenden wird, soweit es nicht auf ein spezielles in Fig. 1 dargestelltes Fünfeck F₁, F₂, F₃ oder F₄ ankommt, die fünfeckige Grundstruktur allgemein mit dem Bezugszeichen F bezeichnet. Jedes Fünfeck F weist eine Halteknotenstelle 3 auf.

Wie in Fig. 1 ferner zu erkennen ist, erstrecken sich die Fünfecke jeweils über die Reifenmitte M von dem dem jeweilligen Fünfeck zugeordneten Spurstrang 6 zu der diesem Fünfeck zugeordneten Halteknotenstelle 3. In Umfangsrichtung U aufeinanderfolgende Fünfecke F können sich jeweils einen Traktionsstrang 7 teilen. Das Laufnetz kann so aus zwei ineinander verschränkten, sich in Umfangsrichtung erstreckenden und in Umfangsrichtung sowie in axialer Richtung gegeneinander versetzten vorzugsweise parallelen Reihen von Fünfecken F aufgebaut sein In Fig. 1 weist beispielsweise die eine Reihe die Fünfecken F₁ und F₃ und die andere Reihe die Fünfecke F₂ und F₄ auf.

Die Halteknotenstellen 3 können, wie Fig. 1 zeigt, jeweils in Umfangsrichtung U versetzt zueinander an den Reifenschultern S angeordnet sein.

Die Fünfecke F können femer symmetrisch ausgestaltet sein. Die ein Fünfeck bildenden Einzelstränge, die der Reifenschulter S zugewandt sind, sind vorzugsweise jeweils länger als die der Reifenmitte M zugewandten Einzelstränge. So ist beispielsweise der Spurstrang 6 kürzer als die beiden Traktionsstränge 7. Die beiden Traktionsstränge 7 wiederum können kürzer als die beiden Diagonalstränge 9 sein. Besonders vorteilhaft bei der Verwendung mit grobstolligen Reifen ist insbesondere ein Seitenverhältnis der fünfeckigen Grundstruktur F von 5:7:9 (Spurstrang : Traktionsstrang : Diagonalstrang) und/oder ein ganzzahliges Vielfaches davon.

Zwischen zwei sich in Richtung der Diagonalstränge 9 einander gegenüberliegende Halteknotenstellen 3 können jeweils vier Fünfecke angeordnet sein. So befinden sich beispielsweise in Fig. 1 zwischen der linken oberen Halteknotenstelle 3 und der rechten unteren Halteknotenstelle 3 die Fünfecke F₁, F₂, F₃ und F₄ mit jeweils wenigstens den diesen Fünfecken zugeordneten Einzelsträngen.

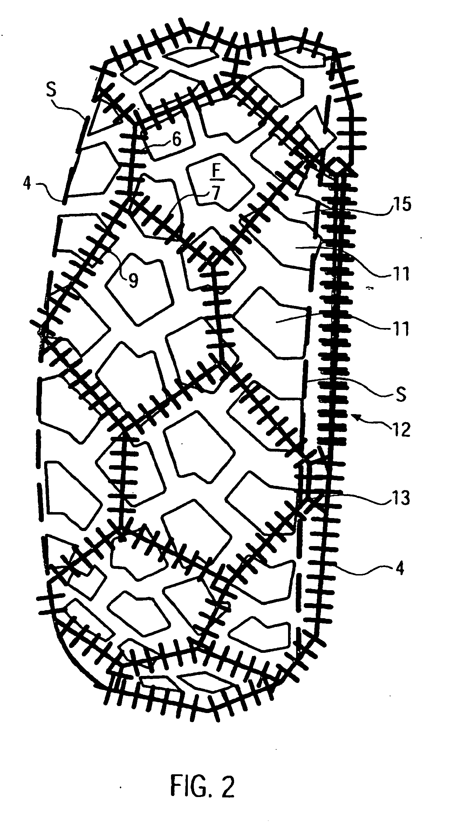

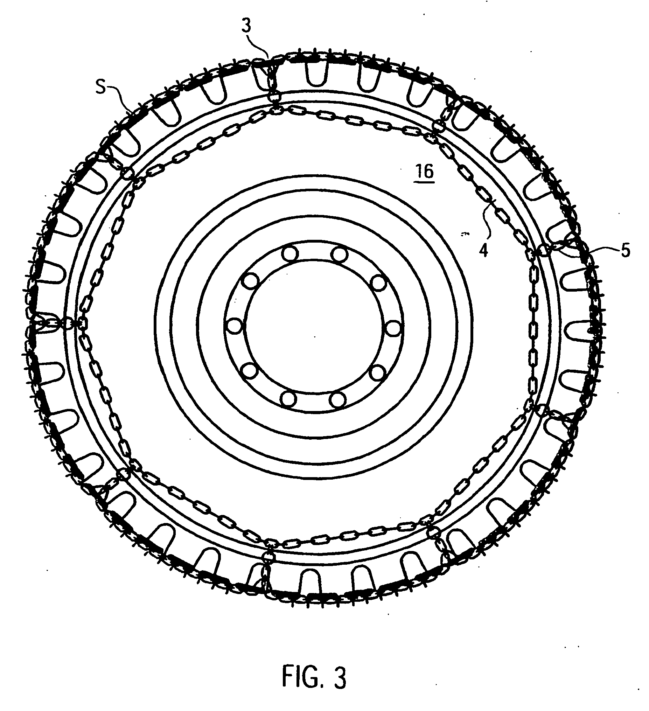

Anhand der Fig. 2 und 3 wird im Folgenden der Aufbau des Ausführungsbeispiels der Fig. 1 im montierten Zustand beschrieben.

Das schematisch dargestellte Laufnetz der Gleitschutzkette der Fig. 2 und 3 ist dabei lediglich beispielhaft aus Einzelsträngen aufgebaut, die aus Rundstahlketten bestehen, die an jedem zweiten Kettenelement, dessen Bug parallel zur Lauffläche 11 des Reifens 12 verläuft, mit Greifstegen 13 versehen sind. Ob allerdings Rundstahlketten oder Ketten, sowie kettenförmige Anordnungen aus anderen Elementen mit oder ohne Greifstegen verwendet werden, hängt vom Anwendungsfall ab.

Wie in Fig. 2 zu erkennen ist, entsteht durch die fünfeckige Grundstruktur ein großflächiges Laufnetz, das sich in der die Lauffläche 11 umhüllenden, in wesentliche zylindrischen Mantelfläche über die Stollen 14 und die Rillen 15 zwischen den Stollen legt. Die einfache geometrische Struktur ermöglicht es, dass die von den Spannsträngen 4 erzeugten Spannkräfte direkt in das Laufnetz eingeleitet werden. Die geringe Anzahl von Knotenstellen führt zu nur geringen Verlusten in der Verteilung der Spannkräfte über das Laufnetz. Die erfindungsgemäße Gleitschutzkette kann sich dadurch nicht in den Rillen 15 festsetzen.

Fig. 3 zeigt den radialen Verlauf der Leiterstränge 5 zwischen dem an der Reifenwange 16 liegenden Seitenspannstrang 4 und den Halteknotenstellen 3 an der Reifenschulter. Durch die Leiterknotenstellen wird die vom Seitenspannstrang 4 erzeugte Spannkraft direkt in der Lauffläche in das Laufnetz 2 eingeleitet, wo sie über die langen Diagonalstränge 9 weiter verteilt wird. Von jedem Diagonalstrang 9 verteilt sich die Spannkraft weiter zu einem Spurstrang 6 und einem Diagonalstrang 7.

Die geringe Anzahl der zwischen den Halteknotenstellen 3 liegenden Einzelstränge 6, 7, 9 führt dazu, dass das Laufnetz weniger locker sitzt und sich gleichzeitig weniger stark im Betrieb strecken kann. Das Laufnetz 2 kann sich somit nicht mehr zwischen den Stollen 14 verfangen. Der große Abstand zwischen den gegenüberliegenden Halteknotenstelle 3 führt gleichzeitig zu eine Flexibilität der Kette, so dass sie Geländeunebenheiten folgen und rechts auf dem Reifen wandern kann.

Selbstverständlich sind von der beim obigen Ausführungsbeispiel lediglich zu Anschauungszwecken dargestellten Geometrie weitere Abweichungen möglich. So muss die fünfeckige Grundstruktur F des Laufnetzes 2 nicht symmetrisch ausgestaltet sein. Bei einer asymmetrischen Ausgestaltung können beispielsweise die Traktionsstränge 7 auch quer zur Umfangsrichtung U verlaufen.

## Patentansprüche

1. Gleitschutzkette (1) für grobstollige Reifen (12), mit wenigstens einem sich im montierten Zustand in Umfangsrichtung (U) entlang jeweils einer Reifenwange (16) erstreckenden Seitenspannstrang (4) und mit einem im montierten Zustand auf der Reifenlauffläche (11) aufliegenden Laufnetz (2), das mit den beiden Seitenspannsträngen (4) über im montierten Zustand an der Reifenschulter (S) angeordnete Halteknotenstellen (3) verbunden ist, **dadurch gekennzeichnet, dass** das Laufnetz (2) aus Einzelsträngen (6, 7, 9) aufgebaut ist, die unter Bildung von geschlossenen Fünfecken (F) miteinander verbunden sind, wobei sich die Fünfecke (F) über die Reifenmitte (M) erstrecken.

2. Gleitschutzkette (1) nach Anspruch 1, **dadurch gekennzeichnet, dass** die Halteknotenstellen (3) jeweils über einen Leiterstrang (5) mit dem zugehörigen Seitenspannstrang (4) verbunden sind.

3. Gleitschutzkette (1) nach Anspruch 1 oder 2, **dadurch gekennzeichnet, dass** die den Reifenschultern (S) zugewandten Einzelstränge (9) eines Fünfecks (F) jeweils länger sind als die der Reifenmitte (M) zugewandten Einzelstränge (6, 7).

4. Gleitschutzkette (1) nach einem der Ansprüche 1 bis 3, **dadurch gekennzeichnet, dass** jedes Fünfeck (F) einen Spurstrang (6), zwei Diagonalstränge (9) und zwei Traktionsstränge (7) umfaßt und die Seitenverhältnisse der Fünfecke (F) 5:7:9 (Spurstrang : Traktionsstrang : Diagonalstrang) und/oder ein ganzzahliges Vielfaches davon betragen.

5. Gleitschutzkette (1) nach einem der Ansprüche 1 bis 4, **dadurch gekennzeichnet, dass** die Fünfecke (F) in Umfangsrichtung (U) verlaufende Spurstränge (6) aufweisen, die durch schräg bis quer zur Reifenmitte (M) verlaufende Traktionsstränge (7) miteinander verbunden sind.

6. Gleitschutzkette (1) nach Anspruch 4 oder 5, **dadurch gekennzeichnet, dass** die Spurstränge (6) kürzer sind als die Traktionsstränge (7).

7. Gleitschutzkette (1) nach einem der Ansprüche 1 bis 6, **dadurch gekennzeichnet, dass** die Fünfecke (F) Diagonalstränge (9) aufweisen, die mit den Halteknotenstellen (3) verbunden sind.

8. Gleitschutzkette (1) nach einem der Ansprüche 4 bis 8, **dadurch gekennzeichnet, dass** die Traktionsstränge (7) kürzer als die Diagonalstränge (9) sind.

9. Gleitschutzkette (1) nach einem der Ansprüche 4 bis 8, **dadurch gekennzeichnet, dass** zwischen zwei in Richtung der Diagonalstränge (9) gegenüberliegenden Halteknotenstellen (3) jeweils vier Fünfecke (F₁, F₂, F₃, F₄) angeordnet sind.

10. Gleitschutzkette (1) nach einem der Ansprüche 1 bis 9, **dadurch gekennzeichnet, dass** sich die Leiterstränge (5) im montierten Zustand in radialer und/oder radiusparalleler Richtung erstrecken.

11. Gleitschutzkette (1) nach einem der Ansprüche 1 bis 10, **dadurch gekennzeichnet, dass** das Laufnetz (2) aus zwei ineinander verschränkten, sich in Umfangsrichtung (U) erstreckenden und in Umfangsrichtung sowie in axialer Richtung (A) gegeneinander versetzten Reihen von Fünfecken (F₁, F₃; F₂, F₄) aufgebaut ist.

12. Gleitschutzkette (1) nach Anspruch 11, **dadurch gekennzeichnet, dass** zwei in Umfangsrichtung (U) benachbarte Fünfecke (F) sich jeweils einen sich im montierten Zustand über die Reifenmitte (M) erstreckenden, im Wesentlichen schräg bis quer zur Ebene (E) durch die Reifenmitte (M) verlaufenden Traktionsstrang (7) teilen.

13. Gleitschutzkette (1) nach einem der Ansprüche 1 bis 12, **dadurch gekennzeichnet, dass** im montierten Zustand auf der Reifenlauffläche (11) liegende Laufknotenstellen (10) des Laufnetzes (2) in zwei jeweils zu beiden Seiten der Reifenmitte (M) parallel zu dieser sich erstreckenden Ebenen (E₁, E₁₁) angeordnet sind.

14. Gleitschutzkette (1) nach einem der Ansprüche 1 bis 13, **dadurch gekennzeichnet, dass** die Halteknotenstellen (3) jeweils in Umfangsrichtung (U) versetzt zueinander an den beiden Reifenschultern (S) angeordnet sind.

15. Gleitschutzkette (1) nach einem der Ansprüche 1 bis 14, **dadurch gekennzeichnet, dass** das Laufnetz (2) Spurstränge (6) aufweist, die im montierten Zustand in Umfangsrichtung (U) abwechselnd zu jeweils einer Seite versetzt gegenüber der Reifenmitte (M) in Umfangsrichtung (U) verlaufen.

16. Gleitschutzkette (1) nach einem der Ansprüche 4 bis 15, **dadurch gekennzeichnet, dass** das Laufnetz (2) eine in Umfangsrichtung (U) durchgängige Spur (8) ausbildet, die über die Diagonalstränge (9) mit den Halteknotenstellen (3) direkt verbunden ist.

17. Stollenreifen (12) mit einer Gleitschutzkette (1), **dadurch gekennzeichnet, dass** die Gleitschutzkette (1) nach einem der Ansprüche 1 bis 16 ausgestaltet ist.

18. Verwendung einer Gleitschutzkette nach einem der Ansprüche 1 bis 16 mit einem grobstolligen Reifen (12).

## Claims

1. Anti-skid chain (1) for deep-tread tyres (12), comprising at least one side tensioning strand (4), which extends in the assembled state in a circumferential direction (U) along a respective tyre flange (16), and comprising a chain tread mesh (2) which is arranged on the tyre tread (11) in the assembled state and is connected to the two side tensioning strands (4) via retaining knot points (3) arranged at the tyre shoulder (S) in the assembled state, **characterised in that** the chain tread mesh (2) is formed of individual strands (6, 7, 9) which are interconnected to form closed pentagons (F), the pentagons (F) extending over the centre (M) of the tyre.

2. Anti-skid chain (1) according to claim 1, **characterised in that** the retaining knot points (3) are each connected to the respective side tensioning strand (4) via a ladder strand (5).

3. Anti-skid chain (1) according to either claim 1 or claim 2, **characterised in that** the individual strands (9) of a pentagon (F) facing the tyre shoulders (S) are each longer than the individual strands (6, 7) facing the centre (M) of the tyre.

4. Anti-skid chain (1) according to any one of claims 1 to 3, **characterised in that** each pentagon (F) comprises a tracking strand (6), two diagonal strands (9) and two traction strands (7) and the side ratios of the pentagons (F) are 5:7:9 (tracking strand : traction strand : diagonal strand) and/or an integral multiple thereof.

5. Anti-skid chain (1) according to any one of claims 1 to 4, **characterised in that** the pentagons (F) comprise tracking strands (6) extending in the circumferential direction (U) which are interconnected via traction strands (7) extending diagonally or transverse relative to the centre (M) of the tyre.

6. Anti-skid chain (1) according to either claim 4 or claim 5, **characterised in that** the tracking strands (6) are shorter than the traction strands (7).

7. Anti-skid chain (1) according to any one of claims 1 to 6, **characterised in that** the polygons (F) comprise diagonal strands (9) which are connected to the retaining knot points (3).

8. Anti-skid chain (1) according to any one of claims 4 to 8, **characterised in that** the traction strands (7) are shorter than the diagonal strands (9).

9. Anti-skid chain (1) according to any one of claims 4 to 8, **characterised in that** four polygons (F₁, F₂, F₃, F₄) are arranged in each case between two retaining knot points (3) opposed in the direction of the diagonal strands (9).

10. Anti-skid chain (1) according to any one of claims 1 to 9, **characterised in that** the lead strands (5) extend in a radial and/or radius-parallel direction in the assembled state.

11. Anti-skid chain (1) according to any one of claims 1 to 10, **characterised in that** the chain tread mesh (2) is formed of two interlocking rows of polygons (F₁, F₂, F₃, F₄) extending in the circumferential direction (U) and offset from one another in both the circumferential direction and the axial direction (A).

12. Anti-skid chain (1) according to claim 11, **characterised in that** every two polygons (F) which are adjacent in the circumferential direction (U) share a traction strand (7) extending over the centre (M) of the tyre, substantially diagonally or transverse relative to the plane (E) through the centre (M) of the tyre, in the assembled state.

13. Anti-skid chain (1) according to any one of claims 1 to 12, **characterised in that** in the assembled state tread knot points (10) in the chain tread mesh (2) disposed over the tyre tread (11) are arranged in two planes (E₁, E₁₁), each extending on either side of the centre (M) of the tyre and parallel thereto.

14. Anti-skid chain (1) according to any one of claims 1 to 13, **characterised in that** the retaining knot points (3) are each arranged offset from one another in the circumferential direction (U) at the two tyre shoulders (S).

15. Anti-skid chain (1) according to any one of claims 1 to 14, **characterised in that** the chain tread mesh (2) comprises tracking strands (6) which, in the assembled state, extend in the circumferential direction (U) alternately on a side offset from the centre (M) of the tyre in the circumferential direction (U).

16. Anti-skid chain (1) according to any one of claims 4 to 15, **characterised in that** the chain tread mesh (2) forms a continuous track (8) in the circumferential direction (U), which is directly connected to the retaining knot points (3) via the diagonal strands (9).

17. Cleated tyre (12) having an anti-skid chain (1), **characterised in that** the anti-skid chain (1) is configured in accordance with any one of claims 1 to 16.

18. Use of an anti-skid chain according to any one of claims 1 to 16 with a deep-tread tyre (12).

## Revendications

1. Chaîne antidérapante (1) pour pneus (12) à grosses barrettes, avec au moins un segment maillé de serrage latéral (4) s'étendant, à l'état monté, dans le sens périphérique (U), le long de chaque joue de pneu (16), et avec un filet de roulement (2), appuyant, à l'état monté, sur la bande de roulement de pneu (11) et qui est raccordé aux deux segments maillés de serrage latéraux (4) par le biais d'emplacements de noeud de retenue (3) disposés, à l'état monté, sur l'épaulement de pneu (S), **caractérisée en ce que** le filet de roulement (2) est constitué de segments maillés individuels (6, 7, 9) qui sont raccordés entre eux en formant des pentagones (F) fermés, les pentagones (F) s'étendant sur le milieu de pneu (M).

2. Chaîne antidérapante (1) selon la revendication 1, **caractérisée en ce que** les emplacements de noeud de retenue (3) sont chacun raccordés au segment maillé de serrage latéral (4) correspondant par le biais d'un segment maillé d'échelle (5).

3. Chaîne antidérapante (1) selon la revendication 1 ou 2, **caractérisée en ce que** les segments maillés individuels (9) d'un pentagone (F) tournés vers les épaulements de pneu (S) sont respectivement plus longs que les segments maillés individuels (6, 7) tournés vers le milieu de pneu (M).

4. Chaîne antidérapante (1) selon l'une des revendications 1 à 3, **caractérisée en ce que** chaque pentagone (F) comprend un segment maillé de voie (6), deux segments maillés diagonaux (9) et deux segments maillés de traction (7), et **en ce que** les rapports latéraux des pentagones (F) sont de 5:7:9 (segment maillé de voie : segment maillé de traction : segment maillé diagonal) et/ou un multiple entier de ce rapport.

5. Chaîne antidérapante (1) selon l'une des revendications 1 à 4, **caractérisée en ce que** les pentagones (F) présentent des segments maillés de voie (6) disposés dans la direction périphérique (U) qui sont raccordés entre eux par des segments maillés de traction (7) disposés de façon oblique à transversale par rapport au milieu de pneu (M).

6. Chaîne antidérapante (1) selon la revendication 4 ou 5, **caractérisée en ce que** les segments maillés de voie (6) sont plus courts que les segments maillés de traction (7).

7. Chaîne antidérapante (1) selon l'une des revendications 1 à 6, **caractérisée en ce que** les pentagones (F) présentent des segments maillés diagonaux (9) qui sont raccordés aux emplacements de noeud de retenue (3).

8. Chaîne antidérapante (1) selon l'une des revendications 4 à 8, **caractérisée en ce que** les segments maillés de traction (7) sont plus courts que les segments maillés diagonaux (9).

9. Chaîne antidérapante (1) selon l'une des revendications 4 à 8, **caractérisée en ce que** quatre pentagones (F₁, F₂, F₃, F₄) sont chaque fois disposés entre deux emplacements de noeud de retenue (3) opposés dans la direction des segments maillés diagonaux (9).

10. Chaîne antidérapante (1) selon l'une des revendications 1 à 9, **caractérisée en ce que** les segments maillés d'échelle (5) s'étendent, à l'état monté, dans une direction radiale et/ou parallèle au rayon.

11. Chaîne antidérapante (1) selon l'une des revendications 1 à 10, **caractérisée en ce que** le filet de roulement (2) est constitué de deux rangées de pentagones (F₁, F₂, F₃, F₄) entrecroisées, s'étendant dans la direction périphérique (U) et décalées les unes par rapport aux autres dans la direction périphérique ainsi que dans la direction axiale (A).

12. Chaîne antidérapante (1) selon la revendication 11, **caractérisée en ce que** deux pentagones (F) voisins dans la direction périphérique se partagent respectivement un segment maillé de traction (7) s'étendant, à l'état monté, sur le milieu de pneu (M) et disposé essentiellement de façon oblique à transversale par rapport au plan (E) traversant le milieu de pneu (M).

13. Chaîne antidérapante (1) selon l'une des revendications 1 à 12, **caractérisée en ce que** des emplacements de noeuds de roulement (10) du filet de roulement (2) situés, à l'état monté, sur la bande de roulement de pneu (11) sont disposés dans deux plans (E_{I}, E_{II}) s'étendant respectivement des deux côtés du milieu de pneu (M) parallèlement à ce milieu.

14. Chaîne antidérapante (1) selon l'une des revendications 1 à 13, **caractérisée en ce que** les emplacements de noeud de retenue (3) sont respectivement, dans la direction périphérique (U), disposés de façon décalés entre eux sur les deux épaulements de pneu (S).

15. Chaîne antidérapante (1) selon l'une des revendications 1 à 14, **caractérisée en ce que** le filet de roulement (2) présente des segments maillés de voie (6) qui, à l'état monté, dans la direction périphérique (U), sont placés, dans la direction périphérique (U), de façon alternativement décalée d'un côté par rapport au milieu de pneu (M).

16. Chaîne antidérapante (1) selon l'une des revendications 4 à 15, **caractérisée en ce que** le filet de roulement (2) forme une voie (8), continue dans la direction périphérique (U), qui est raccordée directement aux emplacements de noeud de retenue (3) par le biais des segments maillés diagonaux (9).

17. Pneu à barrettes (12) avec une chaîne antidérapante (1), **caractérisé en ce que** la chaîne antidérapante (1) est constituée selon l'une des revendications 1 à 16.

18. Utilisation d'une chaîne antidérapante selon l'une des revendications 1 à 16, avec un pneu à grosses barrettes (12).
